# EUROPÄISCHE PATENTANMELDUNG

(11) **EP 0 938 180 A2**
(43) Veröffentlichungstag der Anmeldung: **25.08.1999**
(21) Anmeldenummer: 99103433.1
(22) Anmeldetag: 23.02.1999
(51) Int. Cl.: H02J 7/00

(54) **Verfahren und Vorrichtung zum Ansteuern eines Akkuladegeräts**

(30) Priorität: 24.02.1998 DE 19807707
(71) Anmelder: HAGEN Batterie AG, D-59494 Soest (DE)
(72) Erfinder: Schermann, Dietolf, 85375 Neufahrn (DE); Kirchner, Hermann, 59505 Bad Sassendorf (DE); Steinke, Karsten, 59547 Werl-Westönnen (DE)
(74) Vertreter: Manitz, Finsterwald & Partner

(57) **Zusammenfassung**

Es wird ein Verfahren zum automatischen Ansteuern eines Akkuladegeräts für einen Akkumulator mit einer Zelle oder mehreren Zellen beschrieben. Bei dem Verfahren werden fortlaufend Betriebsdaten des Akkumulators erfaßt und anhand der erfaßten Betriebsdaten vorgegebene Parameter des Akkuladegeräts eingestellt. Dabei werden während der Ansteuerung des Akkuladegeräts die Betriebsdaten weiter fortlaufend erfaßt und abhängig von den erfaßten Betriebsdaten des Akkumulators die Parameter des Akkuladegeräts jeweils automatisch aktualisiert. Weiterhin wird eine Vorrichtung zur Durchführung des Verfahrens beschrieben.

## Beschreibung

Die vorliegende Erfindung betrifft ein Verfahren und eine Vorrichtung zur automatischen Ansteuerung eines Akkuladegeräts für einen eine Zelle oder mehrere Zellen umfassenden Akkumulator.

Akkumulatoren, die beispielsweise für den Antrieb von Fahrzeugen verwendet werden, sind mit unterschiedlichen Kapazitäten (100 Ah bis 1500 Ah), mit unterschiedlichen Spannungen (12 V bis 120 V) und in unterschiedlichen Technologien (normal, wartungsarm, wartungsfrei) erhältlich. Je nach Art des Akkumulators sind für eine optimale Ladung die Parameter eines für die Ladung verwendeten Akkkuladegeräts unterschiedlich einzustellen.

Dies führt dazu, daß entweder die Akkuladegeräte sehr flexibel einstellbar sein müssen und eine Vielzahl von unterschiedlichsten Ladekennlinien realisieren müssen, um zumindest einen Großteil der existierenden Ackumulatoren in geeigneter Weise laden zu können. Solche flexiblen Ladegeräte sind jedoch relativ aufwendig herzustellen und daher sehr teuer, wobei hinzukommt, daß eine Vielzahl solcher Ladegeräte erforderlich sind, wenn eine Vielzahl von vorhandenen unterschiedlichen Akkumulatoren gleichzeitig geladen werden müssen.

Weiterhin gibt es die Möglichkeit, für jeden Akkumulatortyp ein spezielles Ladegerät vorzusehen, das deutlich einfacher aufgebaut sein kann als die genannten universalen, flexiblen Ladegeräte. Dies hat jedoch den Nachteil, daß mit einem solchen Ladegerät nur ein Akkumulatortyp oder wenige bestimmte Akkumulatortypen geladen werden können und somit bei Vorhandensein von unterschiedlichen Akkumulatortypen eine Vielzahl von verschiedenen Ladegeräten benötigt wird.

Sind beispielsweise ältere Ladegeräte, insbesondere einfache, nicht regelbare Ladegeräte vorhanden, so können mit diesen in vielen Fällen neuartige Akkumulatoren nur relativ ineffizient geladen werden. In manchen Fällen kann durch eine falsche Ladung nicht nur kein optimales Ladeergebnis erzielt werden, sondern sogar der Akkumulator zerstört werden.

Selbst der Einsatz von für den jeweiligen Akkumulatortyp spezialisierten Ladegeräten führt jedoch in der Praxis nicht zu einer optimalen Ladung, da sich jeder Akkumulator aufgrund einer Vielzahl von unterschiedlichen Parametern auch von baugleichen anderen Akkumulatoren unterscheidet. So können zwei gleichwertige Akkumulatoren völlig unterschiedliche Ladezustände besitzen, unterschiedlichen Temperaturen ausgesetzt sein und insbesondere eine völlig verschiedene Historie besitzen, da beispielsweise der eine Akkumulator völlig neu ist und noch keinen Ladevorgang hinter sich hat, während ein anderer bereits einer Vielzahl von Betriebs- und Ladezyklen ausgesetzt war.

Auch bei gleich alten Akkumulatoren kann die jeweilige Historie völlig verschieden sein, da manche Akkumulatoren im Betrieb nur sehr wenig, andere hingegen bis an ihre Leistungsgrenze beansprucht werden.

Diese unterschiedlichen Betriebsdaten und insbesondere die unterschiedliche Historie können von üblichen Ladegeräten, auch wenn sie für einen bestimmten Akkumulatortyp spezialisiert sind, nicht berücksichtigt werden. Der tatsächliche Zustand des Akkumulators wird, auch bei Verwendung einer speziell auf den Akkumulatortyp angepaßten Ladekennlinie, somit bei den bekannten Ladeverfahren nicht berücksichtigt.

Zur Ermittlung dieser tatsächlichen Betriebsdaten eines Akkumulators wurde in einem Gemeinschaftsprojekt der Firmen Hagen Batterie AG, Hoppecke Batterien, Sonnenschein GmbH und Varta Batterie AG ein Datenerfassungs- und Übertragungssystem "BICaT" entwickelt. Der BICaT besitzt eine einem Zellenverbinder entsprechende Bauform und wird in der Akkumulatormitte als Zellenverbinder auf zwei Zellenpolen montiert zur Erfassung der Betriebsdaten. Mit dem BICaT ist eine Erfassung von Lade- bzw. Entladestrom, Gesamt- und Teilspannungen, Zellentemperatur und Zeit möglich.

Die von dem BICaT erfaßten Daten können einer Anzeigeeinheit zugeführt werden, so daß Störungen anhand der Anzeige unmittelbar erkannt und geeignete Gegenmaßnahmen eingeleitet werden können.

Weiterhin können die durch den BICaT erfaßten Daten zentral einem übergeordneten Rechner zugeführt und zu Statistikdaten aufbereitet werden.

All diese Anwendungen besitzen jedoch den Nachteil, daß die von dem BICaT gelieferten Daten vom Anwender interpretiert und korrekt ausgewertet werden müssen. Weiterhin muß der Anwender aufgrund der ausgewerteten Daten entscheiden, welche Maßnahmen aufgrund der Daten zu ergreifen sind.

Insbesondere bei der Ladung von Akkumulatoren kann der Anwender üblicherweise auch bei Kenntnis bestimmter Betriebsparameter des Akkumulators keine optimale Ladung durchführen, da entweder das vorhandene Ladegerät überhaupt keine für den zu ladenden Akkumulator geeignete Ladekennlinie besitzt oder die spezialisierte Ladekennlinie eines für den zu ladenden Akkumulator speziell ausgebildeten Ladegeräts aufgrund der von dem BICaT gelieferten Daten zwar ausgewählt und eventuell entsprechend den vor Beginn des Ladevorgangs erfaßten Betriebsdaten angepaßt werden kann, die unterschiedliche Reaktion verschiedener Akkumulatoren während des Ladevorgangs dabei jedoch nicht berücksichtigen werden. Somit ist auch in diesem Fall eine optimale Ladung unterschiedlichster Akkumulatoren nicht möglich.

Aufgabe der Erfindung ist es, ein Verfahren und eine Vorrichtung der eingangs genannten Art anzugeben, mit denen eine schonende und zugleich effiziente, optimale Ladung von unterschiedlichsten Akkumulatoren bei Verwendung praktisch beliebiger Ladegeräte möglich ist.

Der das Verfahren betreffende Teil der Aufgabe wird erfindungsgemäß durch ein Verfahren der eingangs genannten Art gelöst, bei dem fortlaufend Betriebsdaten des Akkumulators erfaßt und anhand der erfaßten Betriebsdaten vorgegebene Parameter des Akkuladegeräts eingestellt werden, wobei während der Ansteuerung des Akkuladegeräts die Betriebsdaten weiter fortlaufend erfaßt und abhängig von den erfaßten Betriebsdaten des Akkumulators die Parameter des Akkuladegeräts jeweils automatisch aktualisiert werden.

Der die Vorrichtung betreffende Teil der Aufgabe wird durch eine Vorrichtung der eingangs genannten Art gelöst, die eine Betriebsdatenerfassungseinheit zur fortlaufenden Erfassung von Betriebsdaten des Akkumulators sowie eine mit der Betriebsdatenerfassungseinheit verbundene Steuereinheit zum Aufnehmen, Speichern und Auswerten der erfaßten Betriebsdaten und zum Einstellen vorgegebener Parameter des Akkuladegeräts anhand der erfaßten Betriebsdaten umfaßt, wobei durch die Betriebsdatenerfassungseinheit die Betriebsdaten während der Ansteuerung des Akkuladegeräts weiter fortlaufend erfaßbar sind und abhängig von den erfaßten Betriebsdaten des Akkumulators durch die Steuereinheit die Parameter des Akkuladegeräts jeweils automatisch aktualisierbar sind.

Die Erfindung nutzt somit die Erkenntnis aus, daß selbst gleich aufgebaute Akkumulatoren aufgrund ihrer unterschiedlichen Historie unterschiedliche Ladungen benötigen, um optimal aufgeladen zu werden. Dabei genügt es nicht, vor Beginn der Ladung erfaßte Betriebsdaten auszuwerten und eine entsprechend angepaßte Ladekennlinie während des Ladevorgangs zu verwenden, sondern es werden erfindungsgemäß auch während des Ladevorgangs Betriebsdaten des Akkumulators erfaßt und für die Ladung maßgebliche Parameter des Akkuladegeräts aufgrund dieser tatsächlichen Betriebsdaten automatisch so aktualisiert, daß eine optimale Ladung erfolgt.

Erfindungsgemaß wurde erkannt, daß selbst bei zu Beginn der Ladung identischen Betriebsdaten unterschiedlicher Akkumulatoren sich die Betriebsdaten im Laufe des Ladevorgangs aufgrund der unterschiedlichen Historie sowie des nie ganz identischen Aufbaus der Akkumulatoren unterscheiden können, so daß für eine optimale Ladung der Akkumulatoren keine vor Beginn der Ladung festgelegte, angepaßte Ladekennlinie zu einer optimalen Ladung führen kann. Erst durch die Auswertung der fortlaufend erfaßten Betriebsdaten auch während des Ladevorgangs und eine entsprechende Aktualisierung oder sogar Abkehr von der ursprünglich festgelegten Ladekennlinie führt erfindungsgemäß zu einer optimalen Ladung des Akkumulators.

Nach einer vorteilhaften Ausführungsform der Erfindung wird eine Vielzahl von über eine vorgegebene Zeitdauer erfaßten Betriebsdaten gespeichert und zur Aktualisierung der Parameter des Akkuladegeräts verwendet. Auf diese Weise ist es möglich, die Historie eines Akkumulators beispielsweise über seine gesamte Lebensdauer zu erfassen und diese Historie bei der Bewertung der während des Ladevorgangs erfaßten, tatsächlichen momentanen Betriebsdaten zu berücksichtigen. Beispielsweise können momentan erfaßte Betriebsdaten, wie Spannung oder Restkapazität unterschiedlicher Akkumulatoren gleich sein, obwohl die Akkumulatoren eine unterschiedliche Historie besitzen. Diese kann durch Erfassen und Speichern früherer Betriebsdaten, wie beispielsweise Anzahl von Tiefentladungen, Anzahl von Volladungen, Über- oder Unterschreiten vorgegebener oberer oder unterer Temperaturgrenzwerte, ermittelt und bei der Bewertung der momentan erfaßten Betriebsdaten berücksichtigt werden.

Erfindungsgemäß können beispielsweise abhängig von den erfaßten Betriebsdaten eine oder mehrere Ausgleichsladungen, Teilausgleichsladungen, Ladeunterbrechungen oder Pulsladungen durchgeführt werden. Dabei kann der Beginn und/oder die Dauer der Pulsladung abhängig von den erfaßten Betriebsdaten gewählt werden.

Werden beispielsweise als Betriebsdaten Differenzspannungsfehler zwischen unterschiedlichen Zellen erfaßt, so kann der Ladevorgang durch eine Ausgleichsladung ergänzt werden, bei der beispielsweise 20 % der Nennkapazität Kₙₑₙₙ zur normalen Ladung hinzugefügt wird. Auf diese Weise kann somit eine Reparatur defekter Zellen vorgenommen werden.

Ebenso kann eine entsprechende Ausgleichsladung vorgesehen werden, wenn aufgrund der erfaßten Betriebsdaten eine vorgegebene Anzahl von Volladungen, beispielsweise zwischen 10 und 30, vorzugsweise 20 Volladungen erkannt wurden.

Eine Ladeunterbrechung oder Pulsladung kann beispielsweise dann erfolgen, wenn beim Auswerten der Betriebsdaten erkannt wird, daß die Batterietemperatur einen oberen Grenzwert überschritten hat. Dieser Grenzwert kann beispielsweise 5°C bis 15°C, insbesondere ca. 10°C unterhalb der zulässigen Maximaltemperatur des Akkumulators angesetzt werden. Die Ladeunterbrechung oder Pulsladung kann so lange durchgeführt werden, bis ein unterer Grenzwert der Temperatur unterschritten wird. Dieser untere Grenzwert kann beispielsweise 2°C bis 5°C unterhalb des oberen Grenzwertes angesetzt werden.

Wird beim Auslesen der Betriebsdaten eine Tiefentladung erkannt, so kann beispielsweise eine Teilausgleichsladung durchgeführt werden. Die Teilausgleichsladung kann dabei vorteilhaft durch eine Pulsladung, beispielsweise über eine halbe bis zwei Stunden, bevorzugt über ca. eine Stunde eingeleitet werden.

Eine Hinzufügung von beispielsweise 10 bis 30 %, insbesondere von ca. 20 % der Nennkapazität des Akkumulators zur normalen Ladung kann beispielsweise auch dann erfolgen, wenn anhand der Betriebsdaten eine bestimmte Anzahl von insbesondere aufeinanderfolgenden unvollständigen Ladungen erkannt wird. Dabei können beispielsweise zwischen 3 und 10, insbesondere ca. 5 hintereinanderliegende unvollständige Ladungen, bei denen der Akkumulator unter 98 %, insbesondere unter 95 % oder unter 90 % aufgeladen wurde, zu einer entsprechenden automatischen Aktualisierung der Ladeparameter führen.

Nach einer weiteren vorteilhaften Ausführungsform der Erfindung erfolgt die Pulsladung durch Ein- und Ausschalten des Ladegeräts abhängig von den erfaßten Betriebsdaten. Auf diese Weise können auch Ladegeräte, die keine einer Pulsladung entsprechende Ladekennlinie besitzen, zum Durchführen einer Pulsladung verwendet werden. Es können somit einfache und kostengünstige Ladegeräte eingesetzt werden, um erfindungsgemäß optimale Ladevorgänge durchzuführen. Damit können insbesondere auch ungeregelte Geräte verwendet werden, um alle möglichen Arten von Akkumulatoren optimal zu laden.

Als Parameter des Akkuladegeräts werden somit im weitesten Sinne auch Ein- und Ausschaltsignale für das Akkuladegerät verstanden, so daß die Aktualisierung der Parameter des Akkuladegeräts gemäß der Erfindung auch das Ein- und Ausschalten eines Akkuladegeräts umfaßt.

Nach einer weiteren bevorzugten Ausführungsform der Erfindung werden zunächst eine Ladung entsprechend einer vorgegebenen Ladungskennlinie und nach Erreichen einer vorgegebenen Umschaltspannung an einer Zelle oder an mehreren Zellen des Akkumulators eine oder mehrere Pülsladungen durchgeführt. Sowohl der Umschaltzeitpunkt von der vorgegebenen Ladungskennlinie auf die Pülsladung als auch die Dauer der jeweiligen Ladepulse wird dabei erfindungsgemäß aus den erfaßten Betriebsdaten abgeleitet.

Bevorzugt wird dabei während der Pulsladung der Akkumulator mit aufeinanderfolgenden Ladepulsen jeweils so lange geladen, bis die an einer Zelle oder an mehreren Zellen anliegende Spannung einen vorgegebenen Grenzwert erreicht oder bis eine vorgegebene Pulsladezeit abgelaufen ist. Im Anschluß an jeden Ladepuls wird dann für eine vorgegebene Ruhezeit im wesentlichen keine Ladung durchgeführt. Insbesondere werden dabei eine Vielzahl von aufeinanderfolgenden Ladepulsen aneinandergereiht, wobei für jeden Ladepuls der zu überprüfende Spannungswert höher ist als für den vorhergehenden Ladepuls. Alternativ kann der zu überprüfende Spannungsgrenzwert für jeden Ladepuls auch höher als der zuletzt erreichte Spannungsgrenzwert gewählt werden.

Durch den erfindungsgemäßen Ladevorgang wird eine besonders schonende Ladung beliebiger Akkumulatorzyklen erreicht. Durch die stufenweise ansteigende Ladespannung während der Pulsladung und die zwischen den Ladepulsen vorgesehenen Ruhepausen wird eine Überladung des Akkumulators verhindert, so daß dieser auch mit ungeregelten Ladegeräten gefahrlos geladen werden kann.

Vorteilhaft werden dabei die Spannungsgrenzwerte jeweils in äquidistanten Abständen zueinander bestimmt. Beispielsweise kann jeweils der nächste Grenzwert um 0,02 V pro Zelle höher liegen als der vorangegangene Grenzwert. Als erster Grenzwert, der die Umschaltspannung darstellt, kann vorteilhaft die Gasungsspannung verwendet werden. Weiterhin werden vorteilhaft die Pulsladezeiten jeweils maximal gleich der sich daran anschließenden Ruhezeit gewählt, so daß zum einen ein zu hohes Ansteigen der Ladespannung verhindert und zum anderen ein ausgewogenes Verhältnis zwischen der Pulsladezeit und der jeweiligen Ruhezeit besteht.

Dabei wird bevorzugt die Pulsladung in einem festen, insbesondere in einem äquidistanten Zeitraster durchgeführt, d.h. daß jeweils zwei aufeinanderfolgende Ladepulse in einem festen, insbesondere im einem äquidistanten Zeitraster ausgelöst werden. Die Pulsladung oder der gesamte Ladevorgang wird vorteilhaft beendet, wenn die an einer Zelle oder die an mehreren Zellen anliegende Spannung einen vorgegebenen maximalen Grenzwert erreicht oder wenn eine vorgegebene maximale Gesamtladezeit abgelaufen ist. Der Ladevorgang kann auch dann beendet werden, wenn ein vorgegebener Ladefaktor erreicht wird. Dabei werden bei der Bestimmung des Ladefaktors erfaßte Betriebsdaten des Akkumulators, insbesondere die Restkapazität, berücksichtigt.

Als Ladungskennlinie, die vor Umschalten auf die Pulsladung verwendet wird, sind unterschiedliche Kennlinien, beispielsweise die Widerstandskennlinie aber auch eine Spannungskennlinie möglich. Als Umschaltspannung von der Ladung gemäß der Ladungskennlinie auf die Pulsladung kann vorteilhaft die Gasungsspannung verwendet werden.

Grundsätzlich ist es gerade bei einer Tiefentladung auch möglich, zuerst eine Pulsladung, beispielsweise über eine Stunde mit 10 Pulsen und einem Zeitraster von 6 Minuten, durchzuführen und anschließend entsprechend den erfaßten Betriebsdaten eine kontinuierliche Ladung anzuschließen.

Als Betriebsdaten des Akkumulators, die für die Ansteuerung des Ladegeräts erfaßt und ausgewertet werden, können insbesondere folgende Daten verwendet werden: die von einer Zelle oder mehreren Zellen des Akkumulators gelieferte Spannung, die zwischen zwei Zellen gemessenen Differenzspannungsfehler, die jeweils an einer Akkumulatorhälfte anliegende Halbspannung, der dem Akkumulator entnommene Strom, der aktuelle und/oder ein früherer Ladezustand des Akkumulators, insbesondere die Anzahl einer aktuellen und/oder einer früheren Tiefentladung, die an einer Zelle oder an mehreren Zellen des Akkumulators gemessene Temperatur, die Anzahl von insbesondere aufeinanderfolgenden Volladungen sowie die Anzahl von insbesondere aufeinanderfolgenden unvollständigen Ladungen.

Vorteilhaft wird das Ladegerät abhängig von den erfaßten Betriebsdaten ein- oder ausgeschaltet, insbesondere abhängig vom Ladezustand des Ackumulators der Zeitpunkt des Ladebeginns gewählt.

Auf diese Weise können zum einen auch mit einem ungeregelten Ladegerät unterschiedliche Ladekennlinien simuliert werden. Beispielsweise kann die bereits beschriebene Pulsladung durch Ein- und Ausschalten des Ladegeräts durchgeführt werden. Zum anderen ist es beispielsweise möglich, den Beginn des Ladevorgangs so zu legen, daß der günstigere Nachtstromtarif zur Anwendung kommt. Dabei kann durch die erfaßten Betriebsdaten automatisch abgeschätzt werden, wann bei dem aus den Betriebsdaten ermittelten Ladezustand des Akkumulators der Ladevorgang abgeschlossen sein wird. Würde das Ende des Ladevorgangs beispielsweise erst nach dem Zeitpunkt liegen, zu dem der Akkumulator wieder benötigt wird, so kann automatisch der Beginn des Ladevorgangs bereits vor Anfang des günstigen Nachttarifs angesetzt werden, da in diesem Fall die Verfügbarkeit des Akkumulators wichtiger ist als die Ladung zu dem verringerten Tarif.

Mit der erfindungsgemäß ausgebildeten Vorrichtung kann insbesondere das erfindungsgemäße Verfahren vorteilhaft durchgeführt werden. Insbesondere ist nach einer vorteilhaften Ausführungsform eine zentrale Steuereinheit vorgesehen, die mit einer Vielzahl von Betriebsdatenerfassungseinheiten verbunden ist. Bevorzugt können dabei zur Ansteuerung mehrerer Akkuladegeräte diese über einen Verteiler mit der zentralen Steuereinheit verbunden und von dieser insbesondere seriell ansteuerbar sein.

Durch die Verwendung einer zentralen Steuereinheit können die Betriebskosten reduziert werden, da nicht für jede Betriebsdatenerfassungseinheit eine eigene Steuereinheit vorgesehen werden muß. Grundsätzlich kann jedem Akkumulator ein Akkuladegerät zugeordnet sein. Es ist jedoch auch möglich, jeweils mehreren Akkumulatoren ein gemeinsames Akkuladegerät zuzuordnen, wobei das Akkuladegerät von der zentralen Steuereinheit entsprechend der von den jeweiligen Betriebsdatenerfassungseinheiten erfaßten Betriebsdaten für jeden Akkumulator unterschiedlich ansteuerbar ist.

Anstelle einer zentralen Steuereinheit ist es auch möglich, jedem Akkuladegerät eine Steuereinheit zuzuordnen, wobei diese insbesondere in das Akkuladegerät integriert sein kann. Bei dieser Ausführungsform entfällt die Notwendigkeit, die verwendeten Ladegeräte mit der zentralen Steuereinheit zu verbinden, was insbesondere bei räumlich voneinander getrennt gelagerten Akkumulatoren und Ladegeräten vorteilhaft sein kann. Insbesondere wenn die Steuereinheit unmittelbar in das jeweilige Akkuladegerät integriert ist, entfällt auch die Verkabelung zwischen Steuereinheit und Akkuladegerät, so daß eine besonders kompakte und einfach zu transportierende Einheit geschaffen wird.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnung näher beschrieben; in diesen zeigen:
- Figur 1: ein Blockdiagramm einer ersten Ausführungsform der Erfindung,
- Figur 2: ein Blockdiagramm einer zweiten Ausführungsform der Erfindung,
- Figur 3: ein Blockdiagramm einer dritten Ausführungsform der Erfindung und
- Figur 4: den Verlauf der Ladespannung über der Zeit, wie er bei einem Ausführungsbeispiel des erfindungsgemäßen Verfahrens beim Laden eines Akkumulators auftritt.

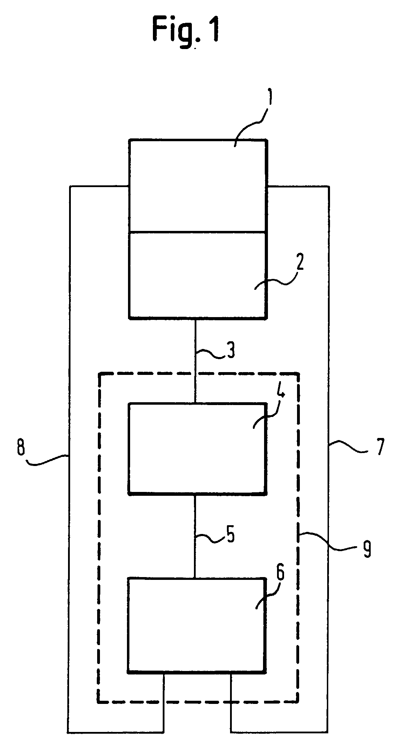

Gemäß Figur 1 ist ein Akkumulator 1 mit einer Betriebsdatenerfassungseinheit 2 verbunden. Die Betriebsdatenerfassungseinheit 2 ist dabei bevorzugt in Form eines Zellenverbinders ausgebildet und unmittelbar auf den beiden mittleren Polen des Akkumulators aufgesetzt. Auf diese Weise können über die Betriebsdatenerfassungseinheit 2 die Betriebsdaten des Akkumulators 1 fortlaufend, insbesondere in periodischen Abständen, erfaßt werden.

Die erfaßten Betriebsdaten werden über eine Leitung 3 in periodischen Abständen an eine Steuereinheit 4 übertragen, in der die erfaßten Betriebsdaten ausgewertet und bei Bedarf gespeichert werden.

Die Steuereinheit 4 ist über eine weitere Leitung 5 mit einem Ladegerät 6 verbunden, wobei die Steuereinheit 4 über die Leitung 5 Steuersignale an das Ladegerät 6 sendet, um vorgegebene Parameter des Ladegeräts 6 einzustellen.

Die Ausgänge des Ladegeräts 6 sind in üblicher Weise mit den Polen des Akkumulators 1 über Anschlußkabel 7, 8 verbunden, so daß der Akkumulator 1 durch die von dem Ladegerät 6 abgegebene Spannung geladen werden kann.

Wie es in Figur 1 gestrichelt dargestellt ist, können die Steuereinheit 4 und das Ladegerät 6 als gemeinsame intelligente Ladeeinheit 9 zusammengefaßt sein, indem die Steuereinheit 4 beispielsweise in das Ladegerät 6 integriert ist. Grundsätzlich ist es jedoch auch möglich, daß ein übliches Ladegerät 6 verwendet wird, das mit der Steuereinheit 4 über eine externe Leitung 5 verbunden ist, so daß jedes übliche Ladegerät 6 durch Hinzufügen einer Steuereinheit 4 zu einer intelligenten Ladeeinheit 9 nachgerüstet werden kann.

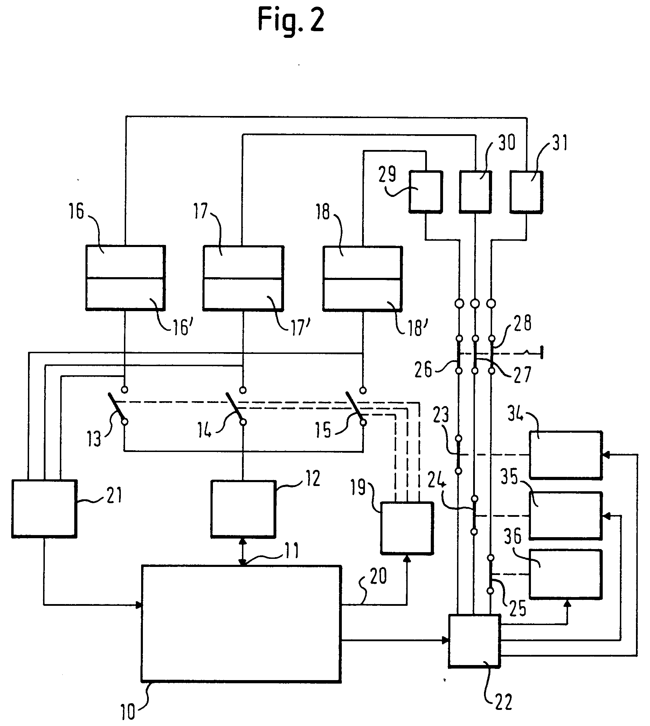

Bei dem Ausführungsbeispiel nach Figur 2 ist anstelle der in Figur 1 dargestellten Steuereinheit 4 eine zentrale Steuereinheit 10 vorgesehen, die beispielsweise als Personalcomputer ausgebildet sein kann.

Die zentrale Steuereinheit ist über eine serielle Schnittstelle 11 mit einem Modem 12 verbunden, das über drei Schalter 13, 14, 15 mit drei auf Ackumulatoren 16, 17, 18 aufgesetzten Betriebsdatenerfassungseinheiten 16', 17', 18' verbunden ist.

Die Schalter 13, 14, 15 sind über eine Relaiskarte 19 schaltbar, wobei die Relaiskarte 19 mit der zentralen Steuereinheit 10 über eine Steuerleitung 20 verbunden ist.

Die Betriebsdatenerfassungseinheiten 16', 17', 18' sind weiterhin mit einem A/D-Wandler 21 verbunden, dessen Ausgang an der zentralen Steuereinheit 10 angeschlossen ist.

Ein weiterer Ausgang der zentralen Steuereinheit 10 ist mit einer weiteren Relaiskarte 22 verbunden, deren Ausgänge über weitere Schalter 23, 24, 25 und Notausschalter 26, 27, 28 mit Ladegeräten 29, 30, 31 verbunden sind. Die Ladegeräte 29, 30, 31 sind wiederum mit den Akkumulatoren 16, 17, 18 verbunden, so daß diese über die Ladegeräte 29, 30, 31 geladen werden können. Die Schalter 23, 24, 25 können über Zeitschaltuhren 34, 35, 36 geöffnet werden, welche eingangsseitig mit der Relaiskarte 22 verbunden sind.

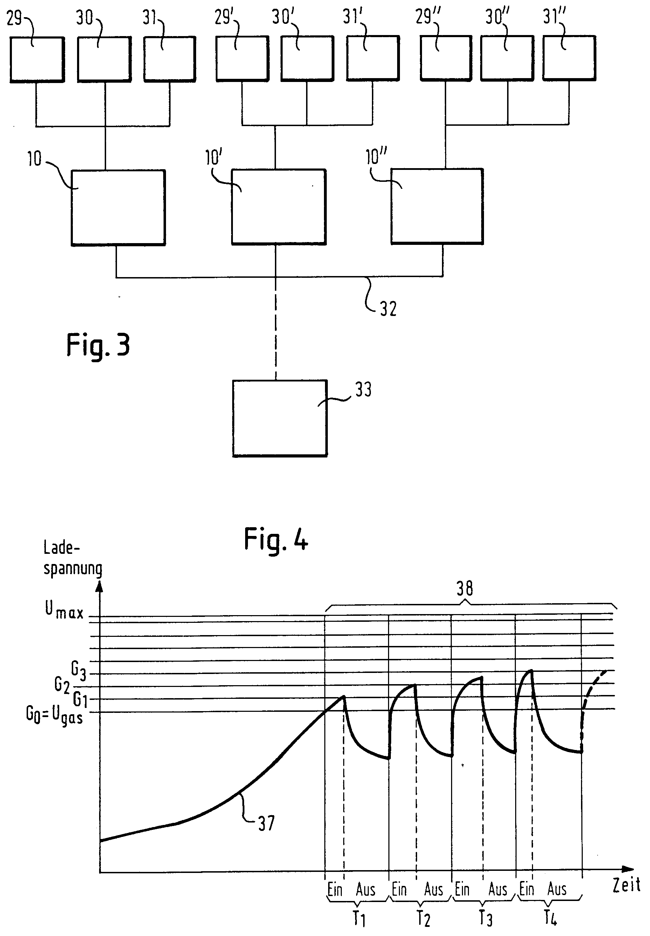

In Figur 3 sind drei Anordnungen gemäß Figur 2, die jeweils schematisch durch zentrale Steuereinheiten 10, 10', 10'' sowie Ladegeräte 29, 30, 31, 29', 30', 31' und 29'', 30'', 31'' dargestellt sind, über ein Netzwerk 32 miteinander verbunden. Weiterhin ist an dem Netzwerk 32 eine weitere Auswerteeinheit 33, beispielsweise in Form eines Personalcomputers, angeschlossen, an die von den zentralen Steuereinheiten 10, 10', 10'' erfaßte und berechnete Daten zur weiteren Auswertung übertragen werden können.

Die in den Figuren 1 bis 3 dargestellten Vorrichtungen werden erfindungsgemäß wie folgt verwendet:

Über die Betriebsdatenerfassungseinheit 2 werden fortlaufend von jedem Akkumulator 1 Betriebsdaten, wie beispielsweise Spannung, Strom, Temperatur, Restkapazität, Anzahl der Tiefentladungen usw., erfaßt.

Bei dem Ausführungsbeispiel gemäß Figur 1 werden die erfaßten Betriebsdaten in periodischen Abständen über die Leitung 3 an die Steuereinheit 4 übertragen.

Anhand der erfaßten Betriebsdaten steuert die Steuereinheit 4 das Ladegerät 6 über die Leitung 5 so an, daß eine optimale Ladung des Akkumulators 1 erfolgt. Dabei werden nicht nur die aktuell erfaßten Betriebsdaten ausgewertet, sondern auch zu einem früheren Zeitpunkt erfaßte Betriebsdaten, die in der Steuereinheit 4 gespeichert sind, zur Ermittlung optimaler Werte für die Parameter des Ladegeräts 6 verwendet. Es ist somit möglich, sowohl die Historie des Akkumulators 1, beispielsweise die Anzahl der vorangegangenen Tiefentladungen oder die Anzahl vorangegangener unvollständiger Ladungen, und zugleich die aktuellen Betriebsdaten zu berücksichtigen, so daß immer die für den aktuellen Zustand des Akkumulators 1 optimalen Ladeparameter eingestellt werden können.

Im Gegensatz zu bekannten Ladegeräten erfolgt somit keine Ladung anhand einer vorgegebenen, eventuell einstellbaren Ladekennlinie, sondern alle Ladeparameter sind während des gesamten Ladevorgangs variabel, so daß auf Änderungen der Betriebsdaten durch eine entsprechende Aktualisierung der Parameter des Ladegeräts 6 unmittelbar reagiert werden kann. Auf diese Weise ist eine optimal schonende und zugleich effiziente Ladung des Akkumulators 1 möglich.

Bei dem Ausführungsbeispiel nach Figur 2 werden die einzelnen Betriebsdatenerfassungseinheiten 16', 17', 18' über die Schalter 13, 14, 15 jeweils nacheinander abwechselnd über das Modem 12 mit der zentralen Steuereinheit 10 zur Übertragung der erfaßten Betriebsdaten der Akkumulatoren 16, 17, 18 verbunden. Die Ansteuerung der Schalter 13, 14, 15 erfolgt dabei durch die zentrale Steuereinheit 10 über die Relaiskarte 19.

Grundsätzlich ist es auch möglich, daß die zentrale Steuereinheit 10 über parallele Leitungen mit den Betriebsdatenerfassungseinheiten 16', 17', 18' verbunden ist. In diesem Fall ist jedoch der Hardwareaufwand größer, da für jede Betriebsdatenerfassungseinheit ein separater Eingang an der zentralen Erfassungseinheit 10 vorgesehen sein muß.

An dem A/D-Wandler 21 sind die an den Akkumulatoren 16, 17, 18 anliegenden Spannungen abgreifbar, so daß anhand der abgegriffenen Spannung erkennbar ist, ob eines der Ladegeräte 29, 30, 31 aktiv ist.

Die Ansteuerung der Ladegeräte 29, 30, 31 über die Relaiskarte 22 sowie die Schalter 23, 24, 25 erfolgt in analoger Weise zu dem Ausführungsbeispiel gemäß Figur 1, wobei gemäß Figur 2 die Schalter 23, 24, 25 über die von der zentralen Steuereinheit unabhängigen Zeitschaltuhren 34, 35, 36 im Störungsfall nach einer vorgegebenen Zeitspanne geöffnet werden können, wodurch die Ladung beendet wird. In ähnlicher Weise sind die Notausschalter 26, 27, 28 zum Abschalten der Ladegeräte 29, 30, 31 im Störungsfall vorgesehen und haben für die erfindungsgemäße Ansteuerung der Ladegeräte 29, 30, 31 keine Bedeutung.

Die Ansteuerung der Ladegeräte 29, 30, 31 erfolgt bei der Vorrichtung gemäß Figur 2 in analoger Weise zu der Ausführungsform nach Figur 1 anhand der von den Betriebsdatenerfassungseinheiten 16', 17', 18' aktuell und zu früheren Zeitpunkten erfaßten Betriebsdaten. Das Ausführungsbeispiel gemäß Figur 2 unterscheidet sich somit von dem Ausführungsbeispiel gemäß Figur 1 lediglich durch die zentrale Erfassung der Betriebsdaten in der zentralen Steuereinheit 10, sowie durch die beschriebene sequentielle Übertragung der Betriebsdaten von den Betriebsdatenerfassungseinheiten 16', 17', 18' zu der zentralen Steuereinheit 10.

Mit der in Figur 3 dargestellten Zusammenschaltung mehrerer Ausführungsformen gemäß Figur 2 ist es möglich, die von den zentralen Steuereinheiten 10, 10', 10'' erfaßten und berechneten Daten an einen übergeordneten Personalcomputer, der eine Auswerteeinheit 33 bildet, zu übergeben. Von diesem kann dann beispielsweise eine Datenanalyse für ein eventuell vorhandenes Managementsystem durchgeführt werden.

Im folgenden wird anhand der Figur 4 ein möglicher Verlauf der Ladespannung bei einem Ladevorgang gemäß dem erfindungsgemäßen Verfahren näher beschrieben:

Zu Beginn des Ladevorgangs erfolgt eine Ladung gemäß der Widerstandskennlinie 37 so lange, bis die Gasungsspannung U_{gas} erreicht wird. Die Gasungsspannung definiert hierbei die Umschaltspannung, bei deren Erreichen von der Ladung gemäß der Widerstandskennlinie 37 auf eine Pulsladung 38 umgeschaltet wird.

Die Pulsladung 38 wird mit einem festen Zeitraster von beispielsweise 3 bis 10, vorzugsweise ca. 6 Minuten durchgeführt, so daß die Pulsladung 38 in einzelne Ladeabschnitte Tᵢ (i = 1 bis n) mit jeweils der gleichen Zeitdauer T unterteilt ist.

Zu Beginn eines Ladeabschnittes wird jeweils ein Ladepuls gestartet, wobei die Länge des Ladepulses maximal 50 % des Ladeabschnittes beträgt. Während der Ladepuls anhält, wird die Akkumulatorspannung gemessen und jeweils mit einem oberen Grenzwert G₁, G₂, G₃ verglichen. Der jeweils zu überprüfende Grenzwert wird dabei wie folgt bestimmt:

Als Ausgangsgrenzwert G₀ wird die Gasungsspannung U_{gas} festgesetzt. Wurde der letzte Grenzwert während des vorangegangenen Zeitabschnittes Tᵢ₋₁ nicht erreicht, so bleibt er für den neuen Zeitabschnitt Tᵢ unverändert.

Wurde hingegen der Grenzwert im vorangegangenen Zeitabschnitt Tᵢ₋₁ erreicht, so wird der neue Grenzwert gemäß Gᵢ₊₁ = Gᵢ + 0,02 V/Zelle berechnet.

Wird der jeweilige Grenzwert vor Ablauf des halben Zeitabschnittes Tᵢ erreicht, so wird die Ladung abgeschaltet. Auf diese Weise folgtjedem in Figur 4 mit "Ein" bezeichneten Ladepulszeitintervall ein mit "Aus" bezeichnete Ruhezeitintervall, so daß eine schonende Ladung des Akkumulators erreicht wird, bei der sowohl die Gasentwicklung in Grenzen gehalten als auch unterschiedliches Ladeverhalten einzelner Zellen angeglichen wird.

Nach Erreichen einer vorgegebenen Obergrenze der Akkumulatorspannung, beispielsweise 2,8 V/Zelle bei geschlossenen Akkumulatoren oder 2,55 V/Zelle bei verschlossenen Akkumulatoren, wird die Pulsladung und damit der Ladevorgang beendet. Ebenso wird die gesamte Ladung bei Erreichen des Zielladefaktors unter Berücksichtigung der durch die Betriebsdatenerfassungseinheit ermittelten Restkapazität des Akkumulators beendet.

Die erfaßten Spannungswerte werden temperaturkompensiert, wobei der Korrekturfaktor sowie die Temperatur den Betriebsdatenerfassungseinheiten entnommen werden können.

Neben dem beschriebenen Ladeverfahren, sind mit dem erfindungsgemäßen Verfahren beliebige Variationen der Ladeparameter möglich. Beispielsweise sind folgende Variationen möglich:
- Pulsladung zu Beginn des Ladevorgangs bei sulfatierten oder tiefentladenen Akkumulatoren und Laden mit verändertem Ladefaktor sowie abschließender Ausgleichsladung,
- Abschalten der Ladung, wenn der notwendige Ladefaktor erreicht wurde,
- Verlängerung der Ladung, wenn die notwendige Ladungsmenge noch nicht eingeladen wurde,
- Durchführen einer automatischen Ausgleichsladung, insbesondere im Fehlerfall, wie beispielsweise nach Tiefentladungen oder Differenzspannungsfehlern,
- automatische Ladeerhaltung,
- Temperaturüberwachung und gegebenenfalls Pausieren oder Pulsieren der Ladung bei Unter- oder Überschreiten vorgegebener Temperaturgrenzwerte,
- zeitverzögertes Einschalten des Ladegeräts, um beispielsweise den günstigeren Nachtstromtarif zu nutzen,
- zeitversetztes Einschalten, um das Stromnetz nicht zu überlasten,
- Verhindern, daß Akkumulatoren mit einem ungeeigneten Ladegerät bzw. Ladeverfahren geladen werden. Dabei ist ein Notladeprogramm im unkritischen Ladebereich bis zur Gasungsspannung möglich,
- Anpassung von nicht exakt passenden Ladeverfahren an Akkumulator, beispielsweise durch Pulsen, Verlängern oder Verkürzen der Ladung,
- Überprüfung der Temperatur des Akkumulators und Beginn der Ladung nur, wenn die Temperatur innerhalb eines vorgegebenen Bereichs liegt. Über- oder Unterschreiten bestimmter Temperaturgrenzwerte führen zu einer Meldung der Akkumulatoren als "nicht ladefertig",
- automatische Wassernachfüllung bei zu geringem Wasserstand, wenn als Betriebsdaten auch der Füllstand des Akkumulators erfaßbar ist.

### Bezugszeichenliste

- 1: Akkumulator
- 2: Betriebsdatenerfassungseinheit
- 3: Leitung
- 4: Steuereinheit
- 5: Leitung
- 6: Ladegerät
- 7: Anschlußkabel
- 8: Anschlußkabel
- 9: intelligente Ladeeinheit
- 10: zentrale Steuereinheit
- 11: serielle Schnittstelle
- 12: Modem
- 13: Schalter
- 14: Schalter
- 15: Schalter
- 16: Akkumulator
- 16': Betriebsdatenerfassungseinheit
- 17: Akkumulator
- 17': Betriebsdatenerfassungseinheit
- 18: Akkumulator
- 18': Betriebsdatenerfassungseinheit
- 19: Relaiskarte
- 20: Steuerleitung
- 21: A/D-Wandler
- 22: Relaiskarte
- 23: Schalter
- 24: Schalter
- 25: Schalter
- 26: Notausschalter
- 27: Notausschalter
- 28: Notausschalter
- 29: Ladegerät
- 30: Ladegerät
- 31: Ladegerät
- 32: Netzwerk
- 33: Auswerteeinheit
- 34: Zeitschaltuhr
- 35: Zeitschaltuhr
- 36: Zeitschaltuhr
- 37: Widerstandskennlinie
- 38: Pulsladung

## Patentansprüche

1. Verfahren zum automatischen Ansteuern eines Akkuladegeräts (6, 29, 30, 31) für einen Akkumulator (1, 16, 17, 18) mit einer Zelle oder mehreren Zellen, bei dem fortlaufend Betriebsdaten des Akkumulators (1, 16, 17, 18) erfaßt und anhand der erfaßten Betriebsdaten vorgegebene Parameter des Akkuladegeräts (6, 29, 30, 31) eingestellt werden, wobei während der Ansteuerung des Akkuladegeräts (6, 29, 30, 31) die Betriebsdaten weiter fortlaufend erfaßt und abhängig von den erfaßten Betriebsdaten des Akkumulators (1, 16, 17, 18) die Parameter des Akkuladegeräts (6, 29, 30, 31) jeweils automatisch aktualisiert werden.

2. Verfahren nach Anspruch 1,
**dadurch gekennzeichnet,**
daß eine Vielzahl von über eine vorgegebene Zeitdauer erfaßten Betriebsdaten gespeichert und zur Aktualisierung der Parameter des Akkuladegeräts (6, 29, 30, 31) verwendet wird und/oder daß abhängig von den erfaßten Betriebsdaten eine oder mehrere Ausgleichsladungen durchgeführt werden.

3. Verfahren nach einem der vorhergehenden Ansprüche,
**dadurch gekennzeichnet,**
daß abhängig von den erfaßten Betriebsdaten eine oder mehrere Pulsladungen durchgeführt werden, insbesondere daß der Beginn und/oder die Dauer der Pulsladung abhängig von den erfaßten Betriebsdaten gewählt wird und/oder die Pulsladung durch Ein- und Ausschalten des Ladegeräts abhängig von den erfaßten Betriebsdaten erfolgt.

4. Verfahren nach einem der vorhergehenden Ansprüche,
**dadurch gekennzeichnet,**
daß zunächst eine Ladung entsprechend einer vorgegebenen Ladungskennlinie (37) durchgeführt wird und daß nach Erreichen einer vorgegebenen Umschaltspannung G₀ an einer Zelle oder an mehreren Zellen des Akkumulators (1, 16, 17, 18) eine oder mehrere Pulsladungen durchgeführt werden, und/oder daß während der Pulsladung der Akkumulator mit aufeinanderfolgenden Ladepulsen jeweils solange geladen wird, bis die an einer Zelle oder an mehreren Zellen anliegende Spannung einen vorgegebenen Grenzwert (G₁, G₂, G₃) erreicht oder bis eine vorgegebene Pulsladezeit abgelaufen ist und daß im Anschluß an jeden Ladepuls für eine vorgegebene Ruhezeit im wesentlichen keine Ladung durchgeführt wird, wobei insbesondere eine Vielzahl von aufeinanderfolgenden Ladepulsen aneinandergereiht werden, wobei für jeden Ladepuls der zu überprüfende Spannungsgrenzwert (G₁, G₂, G₃) höher ist als für den vorhergehenden Ladepuls und/oder bevorzugt eine Vielzahl von aufeinanderfolgenden Ladepulsen aneinandergereiht werden, wobei für jeden Ladepuls der zu überprüfende Spannungsgrenzwert höher ist als der zuletzt erreichte Spannungsgrenzwert und/oder die Spannungsgrenzwerte (G_{0,} G₁, G₂, G₃) jeweils in äquidistanten Abständen zueinander gewählt werden.

5. Verfahren nach Anspruch 4,
**dadurch gekennzeichnet,**
daß die Pulsladezeit jeweils maximal gleich der sich daran anschließenden Ruhezeit gewählt wird und/oder daß die Pulsladung in einem festen, insbesondere in einem äquidistanten Zeitraster durchgeführt wird, d.h. daß jeweils zwei aufeinanderfolgende Ladepulse in einem festen, insbesondere in einem äquidistanten Zeitraster ausgelöst werden.

6. Verfahren nach einem der Ansprüche 3 bis 5,
**dadurch gekennzeichnet,**
daß die Pulsladung oder der gesamte Ladevorgang beendet wird, wenn die an einer Zelle oder die an mehreren Zellen anliegende Spannung einen vorgegebenen maximalen Grenzwert erreicht oder wenn eine vorgegebene maximale Gesamtladezeit abgelaufen ist und/oder daß als Umschaltspannung die Gasungsspannung verwendet wird und/oder daß als Ladungskennlinie die Widerstandskennlinie verwendet wird und/oder daß der gesamte Ladevorgang beendet wird, wenn ein vorgegebener Ladefaktor erreicht wird, wobei insbesondere bei der Bestimmung des Ladefaktors erfaßte Betriebsdaten des Akkumulators (1, 16, 17, 18), insbesondere die Restkapazität, berücksichtigt werden.

7. Verfahren nach einem der vorhergehenden Ansprüche,
**dadurch gekennzeichnet,**
daß als Betriebsdaten die von einer Zelle oder von mehreren Zellen des Akkumulators (1, 16, 17, 18) gelieferte Spannung verwendet wird und/oder daß als Betriebsdaten die zwischen zwei Zellen gemessenen Differenzspannungsfehler verwendet werden und/oder daß als Betriebsdaten der einer Zelle oder mehreren Zellen des Ackumulators (1, 16, 17, 18) entnommene Strom verwendet wird und/oder daß als Betriebsdaten der aktuelle und/oder ein früherer Ladezustand des Akkumulators (1, 16, 17, 18), insbesondere eine aktuelle und/oder frühere Tiefentladung verwendet wird und/oder daß als Betriebsdaten die an einer Zelle oder an mehreren Zellen des Akkumulators (1, 16, 17, 18) gemessene Temperatur verwendet wird.

8. Verfahren nach einem der vorhergehenden Ansprüche,
**dadurch gekennzeichnet,**
daß als Betriebsdaten die Anzahl von insbesondere aufeinanderfolgenden Volladungen verwendet wird und/oder daß als Betriebsdaten die Anzahl von insbesondere aufeinanderfolgenden unvollständigen Ladungen verwendet wird und/oder daß abhängig von den erfaßten Betriebsdaten das Ladegerät (6, 29, 30, 31) ein- und/oder ausgeschaltet wird, insbesondere abhängig vom Ladezustand des Akkumulators (1, 16, 17, 18) der Zeitpunkt des Ladebeginns gewählt wird, und/oder daß abhängig von den erfaßten Betriebsdaten der von dem Ladegerät (6, 29, 30, 31) gelieferte Strom geregelt wird und/oder daß abhängig von den erfaßten Betriebsdaten die von dem Ladegerät (6, 29, 30, 31) gelieferte Spannung geregelt wird, und/oder daß abhängig von den erfaßten Betriebsdaten eine Ladekennlinie oder mehrere Ladekennlinien des Ladegeräts (6, 29, 30, 31) ausgewählt wird bzw. werden und/oder daß die Ladung unterbrochen oder eine Pulsladung durchgeführt wird, wenn die erfaßte Temperatur einen vorgegebenen oberen Grenzwert überschreitet, wobei insbesondere die Ladung wieder aufgenommen und gegebenenfalls die Pulsladung abgebrochen wird, wenn die erfaßte Temperatur einen vorgegebenen unteren Grenzwert überschreitet.

9. Vorrichtung zur automatischen Ansteuerung eines Akkuladegeräts (6, 29, 30, 31) für einen eine Zelle oder mehrere Zellen umfassenden Akkumulator (1, 16, 17, 18), insbesondere zur Durchführung des Verfahrens nach einem der vorhergehenden Ansprüche, mit einer Betriebsdatenerfassungseinheit (2, 16', 17', 18') zur fortlaufenden Erfassung von Betriebsdaten des Akkumulators (1, 16, 17, 18) und mit einer mit der Betriebsdatenerfassungseinheit (2, 16', 17', 18') verbundenen Steuereinheit (4, 10) zum Aufnehmen, Speichern und Auswerten der erfaßten Betriebsdaten und zum Einstellen vorgegebener Parameter des Akkuladegeräts (6, 29, 30, 31) anhand der erfaßten Betriebsdaten, wobei durch die Betriebsdatenerfassungseinheit (2, 16', 17', 18') die Betriebsdaten während der Ansteuerung des Akkuladegeräts (6, 29, 30, 31) weiter fortlaufend erfaßbar sind und abhängig von den erfaßten Betriebsdaten des Akkumulators (1, 16, 17, 18) durch die Steuereinheit die Parameter des Akkuladegeräts (6, 29, 30, 31) jeweils automatisch aktualisierbar sind, wobei vorzugsweise eine zentrale Steuereinheit (10) vorgesehen ist, die mit einer Vielzahl von Betriebsdatenerfassungseinheiten (16', 17', 18') verbunden ist und weiter bevorzugt zur Ansteuerung mehrerer Ackuladegeräte (29, 30, 31) diese über einen Verteiler (22) mit der zentralen Steuereinheit (10) verbunden und von dieser insbesondere seriell ansteuerbar sind.

10. Vorrichtung nach Anspruch 9,
**dadurch gekennzeichnet,**
daß im wesentlichen jedem Akkumulator (1, 16, 17, 18) ein Akkuladegerät (6, 29, 30, 31) oder daß ein Akkuladegerät mehreren Akkumulatoren zugeordnet ist, wobei das Akküladegerät von der zentralen Steuereinheit entsprechend der von den jeweiligen Betriebsdatenerfassungseinheiten erfaßten Betriebsdaten für jeden Akkumulator unterschiedlich ansteuerbar ist.

11. Vorrichtung nach Anspruch 10,
**dadurch gekennzeichnet,**
daß jedem Akkuladegerät eine Steuereinheit zugeordnet ist, insbesondere daß die Steuereinheit in das Akkuladegerät integriert ist.

12. Vorrichtung nach einem der Ansprüche 9 bis 11,
**dadurch gekennzeichnet,**
daß die Steuereinheiten für unterschiedliche Akkuladegeräte nachrüstbar sind und/oder daß die Steuereinheit, insbesondere die zentrale Steuereinheit, als Personal Computer ausgebildet ist.
